# EUROPÄISCHE PATENTSCHRIFT

(11) **EP 3 414 073 B1**
(45) Veröffentlichungstag und Bekanntmachung des Hinweises auf die Patenterteilung: **15.04.2020**
(21) Anmeldenummer: 17707481.2
(22) Anmeldetag: 10.02.2017
(51) Int. Cl.: B29C 45/16, B29C 45/28

(54) **VERFAHREN ZUR HERSTELLUNG EINES KUNSTSTOFFTEILS IM ZWEIKOMPONENTEN-SPRITZVERFAHREN**
METHOD FOR PRODUCING A PLASTIC PART IN THE TWO-COMPONENT INJECTION MOULDING METHOD
PROCÉDÉ POUR LA FABRICATION D'UNE PIÈCE EN MATÉRIAU SYNTHÉTIQUE DANS UN PROCÉDÉ DE MOULAGE PAR INJECTION À DEUX COMPOSANTS

(30) Priorität: 10.02.2016 DE 102016102345
(43) Veröffentlichungstag der Anmeldung: 19.12.2018
(73) Patentinhaber: Z-Werkzeugbau-GmbH, 6850 Dornbirn (AT)
(72) Erfinder: HAEMMERLE, Hubert, 6850 Dornbirn (AT); HELTH, Franz, 6845 Hohenems (AT); MOOSBRUGGER, Thomas, 6850 Dornbirn (AT)
(74) Vertreter: Müller, Enno
(86) Internationale Anmeldenummer: PCT/EP2017/053024
(87) Internationale Veröffentlichungsnummer: WO 2017/137572

(56) Entgegenhaltungen:
- DE-A1- 19 508 509
- DE-A1- 19 948 664
- JP-A- H01 304 919
- "ZWEI KOMPONENTEN MIT KOAXIALEN NADELN SPRITZGIESSEN", KUNSTSTOFFE, CARL HANSER VERLAG, MUNCHEN, DE, Bd. 88, Nr. 12, 1. Dezember 1998 (1998-12-01), Seite 2162, XP000936413, ISSN: 0023-5563

## Beschreibung

### Gebiet der Technik

Die Erfindung betrifft ein Verfahren zur Herstellung eines Kunststoffteils im Zweikomponenten-Spritzverfahren mit einem ein erstes und ein zweites Formteil aufweisenden Kunststoff-Spritzwerkzeug, wobei die Formteile relativ zueinander zwischen einer Form-Öffnungsstellung und einer Form-Verschlussstellung bewegbar sind, wobei weiter in einem Formteil eine Anspritzdüse ausgebildet ist, eine erste und eine zweite Kunststoffkomponente verspritzt werden kann und ein Freihalteteil vorgesehen ist, wobei darüber hinaus zur Herstellung des Kunststoff-Spritzteils in einem ersten Spritzvorgang die erste Komponente zur Bildung eines ersten Teilbereichs des Kunststoff-Spritzteils verspritzt wird und in einem zweiten Spritzvorgang die zweite Komponente zur Bildung eines zweiten Teilbereichs des Kunststoff-Spritzteils verspritzt wird, wobei sich weiter das Freihalteteil vor einer Durchführung des ersten Spritzvorganges in der Form-Verschlussstellung in der ersten Stellung befindet, in welcher es einen Freiraum begrenzt, wonach in dem ersten Spritzvorgang der den Freiraum aufweisende erste Teilbereich hergestellt wird, und für den zweiten Spritzvorgang, in welchem der zweite Teilbereich unter Nutzung des Freiraums hergestellt wird, das Freihalteteil in eine zweite Stellung verfahren wird, wobei weiter die Stellung durch ein Verfahrens des Freihalteteils zu dem Formteil hin erreicht wird, in welchem die Anspritzdüse zum Verspritzen der zweiten Kunststoffkomponente ausgebildet ist, und ein zwischen einer ersten und einer zweiten Kernstellung verfahrbarer Formkern vorgesehen ist und das Freihalteteil in der ersten Stellung bis in eine Anlage bezüglich ihrer Stirnfläche an den Formkern vorgefahren ist.

### Stand der Technik

Derartige Verfahren zur Herstellung eines Kunststoffteils im Zweikomponenten-Spritzverfahren und auch Kunststoff-Spritzwerkzeuge zur Herstellung eines Kunststoffteils im Zweikomponenten-Spritzverfahren sind bereits in verschiedener Hinsicht bekannt geworden.

Aus der DE 103 14 032 A1 ist ein übliches Verfahren zur Herstellung eines Kunststoff-Spritzteils im Zweikomponenten-Spritzverfahren bekannt, wobei in einem ersten Kunststoff-Spritzwerkzeug der erste Teilbereich gespritzt wird und ein so hergestellter Vorspritzling dann in ein zweites Kunststoff-Spritzwerkzeug umgesetzt wird, in welchem die zweite Komponente gespritzt wird. Das zweite Kunststoff-Spritzwerkzeug weist hierbei verfahrbare Zentrierstifte auf, die in Freiräume eingreifen, die bei der Herstellung des Vorspritzlings in dem Vorspritzling gebildet wurden. Nach erfolgtem Einlegen des Vorspritzlings in das zweite Kunststoff-Spritzwerkzeug werden die Zentrierstifte zurückgefahren und der zweite Teilbereich des Kunststoff-Spritzteils unter Nutzung der Freiräume in dem zweiten Kunststoff-Spritzwerkzeug hergestellt.

Darüber hinaus ist es für die Herstellung des Kunststoff-Spritzteils im Einkomponenten-Spritzverfahren aus der WO 2010/003249 A1 (US 2010/0007058 A1) bekannt, ein zentrales, aktiv nicht verfahrbares und praktisch feststehendes Stangenteil einer Anspritzdüse bis an das gegenüberliegende Formteil vorzufahren, um so einen Lochbereich in dem herzustellenden Kunststoff-Spritzteil auszubilden.

Aus der DE 10 2012 005 531 A1 ist ein insofern dem aus der WO 2010/003249 A1 vergleichbares Kunststoff-Spritzwerkzeug mit einer Anspritzdüse zum Verspritzen zweier Kunststoffkomponenten bekannt, bei welchem die Anspritzdüse gleichfalls ein mittleres, vorragendes Teil aufweist, das bei einem Verspritzen in dichtende Anlage an der gegenüberliegenden Formhälfte ist. Das mittlere vorragende Teil ist in Bezug auf einen Grundkörper der Anspritzdüse feststehend. Dieses bekannte Kunststoff-Spritzwerkzeug ermöglicht nur die Herstellung eines Kunststoffteils im Zweikomponenten-Spritzgießverfahren mit einem Loch, das dem mittleren, vorragenden Teil entspricht.

Aus der US 5,472,655 A ist ein Kunststoff-Spritzwerkzeug bekannt, bei welchem durch Wenden einer Formhälfte gegenüber der anderen Formhälfte in der zu wendenden Formhälfte zurückziehbare Kerne vorgesehen sind, die in einer Stellung einen Raum gegen Ausspritzen blockieren und in der anderen Stellung das Ausspritzen ermöglichen.

Weiter ist zum Stand der Technik auf die DE 197 22 612 C1 zu verweisen. Hieraus ist ein Kunststoff-Spritzwerkzeug zum Verspritzen von zwei Kunststoffkomponenten bekannt, wobei in der Formhälfte, die der mit der Spritzdüse ausgestatteten Formhälfte gegenüberliegt, ein verfahrbares Freihalteteil angeordnet ist, das beim Verspritzen der ersten Komponente gegen die Anspritzdüse vorgefahren ist und beim Verspritzen der zweiten Komponente von der Anspritzdüse weggefahren ist.

Aus der Literaturstelle "Zweikomponenten mit koaxialen Nadeln spritzgießen" ist es bekannt, eine Hohlnadel einer Anspritzdüse an einem verfahrbaren Kern zum Verspritzen einer ersten Komponente zur Anlage zu bringen. Darüber hinaus ist es aus DE 195 08 509 A1 ein vergleichbares Verfahren bekannt, bei dem auch die Verschlussnadel stirnflächig in Anlage zu einem gegenüberliegenden Formteil bei der Verspritzung einer ersten Komponente kommt. Aus der JP H01304919 A ist ein Verfahren und eine Vorrichtung bekannt, bei welcher in der Spritzform Abteilplatten vorgesehen sind, die bei einer Verspritzung der ersten Komponente im Sinne einer Abschieberung ein weiterer Formhohlraum abteilen, der bei der Verspritzung der zweiten Komponente, nachdem die Abteilplatten zurückgezogen sind, mit der zweiten Komponente gefüllt wird. Die DE 199 48 664 A1 betrifft das Verspritzen einer Fasermatte ohne ein Freihalteteil.

Ausgehend von dem dargelegten Stand der Technik beschäftigt sich die Erfindung mit der Aufgabenstellung, ein vorteilhaftes Verfahren zur Herstellung eines Kunststoff-Spritzteils im Zweikomponenten-Spritzverfahren anzugeben.

Diese Aufgabe ist beim Gegenstand des Anspruches 1 gelöst, wobei darauf abgestellt ist, dass das Freihalteteil als ein bevorzugt zentral in der Anspritzdüse angeordnetes Stangenteil oder als Verschlussteil der Anspritzdüse ausgebildet ist, dass der Formkern auch eine Seitenfläche des Kunststoffteils begrenzt, dass die Seitenfläche in der zweiten Kernstellung teilweise freiliegend ist im Hinblick auf einen von dem Formkern freigegebenen Raum des Formhohlraums und dass der Formkern zugleich auch an einem weiteren Bereich der zuvor gebildeten Seitenfläche den freigegebenen Hohlraum abdichtet, so dass die in dieser Stellung der Anspritzdüse verspritzte Kunststoffmasse der zweiten Komponente nicht in den freigegebenen Formhohlraum eindringen kann.

Diese Aufgabe ist weiter verfahrensmäßig bei dem Gegenstand des Anspruches 2 gelöst, wobei darauf abgestellt ist, dass das Freihalteteil als ein bevorzugt zentral in der Anspritzdüse angeordnetes Stangenteil oder als Verschlussteil der Anspritzdüse ausgebildet ist, dass der Formkern auch eine Seitenfläche des Kunststoffteils begrenzt, dass die Seitenfläche in der zweiten Kernstellung teilweise freiliegend ist im Hinblick auf einen von dem Formkern freigegebenen Raum des Formhohlraums und dass der Formkern zugleich auch an einem weiteren Bereich der zuvor gebildeten Seitenfläche den freigegebenen Hohlraum abdichtet, so dass die in dieser Stellung der Anspritzdüse verspritze Kunststoffmasse der zweiten Komponente nicht in den freigegebenen Formhohlraum eindringen kann.

Das Verfahren des Freihalteteils erfolgt bevorzugt selbsttätig, etwa durch eine vorprogrammierte Steuerung während eines Spritzzyklus des Kunststoff-Spritzwerkzeuges im Zuge der Herstellung des jeweiligen Kunststoff-Spritzteils. Vorrichtungsmäßig kann ein Aktor wie insbesondere ein Elektromotor in dem Kunststoff-Spritzwerkzeug vorgesehen sein, der, bspw. über eine getriebemäßige Verbindung, mit dem Freihalteteil zum Verfahren zusammenwirkt. Eine gleiche Ausgestaltung kann hinsichtlich des beweglichen Formkerns in der zweiten Formhälfte, soweit dieser vorgesehen ist, gegeben sein.

Insbesondere kann vorgesehen sein, dass zwei voneinander gesonderte Anspritzdüsen ausgebildet sind, von welchen bevorzugt eine erste Anspritzdüse zum Verspritzen der ersten Kunststoffkomponente und eine zweite Anspritzdüse zum Verspritzen der zweiten Kunststoffkomponente vorgesehen sind. Weiter kann bevorzugt vorgesehen sein, dass beide Anspritzdüsen in demselben Formteil ausgebildet sind. Weiter ist unabhängig oder kombiniert mit Vorstehendem bevorzugt, dass eines der Formteile, ggf. das Formteil in welchem der verfahrbare Kern angeordnet ist und/oder in welchem die Anliegefläche ausgebildet ist, ohne jede Anspritzdüse ausgebildet ist.

Es ist auch bevorzugt, dass das Freihalteteil sich in der ersten Stellung in unmittelbarer Zusammenwirkung mit dem gegenüberliegenden Formteil befindet. Somit kann der Freiraum eine Durchgangsöffnung bezüglich des ersten Teilbereiches sein. Diese Durchgangsöffnung kann entsprechend in dem zweiten Spritzvorgang ganz oder teilweise mit der zweiten Komponente ausgefüllt werden.

Das Freihalteteil kann zugleich ein Verschlussteil einer Anspritzdüse sein. Das Freihalteteil kann aber auch lediglich ein bevorzugt zentral in der Ausspritzdüse angeordnetes Stangenteil sein, das zum Verschluss der Anspritzdüse nichts beiträgt oder nur einen Teilbereich eines Öffnungsquerschnittes der Anspritzdüse verschließen kann.

In dem Formteil, mit welchem das Freihalteteil in der ersten Stellung zusammenwirkt, nämlich bevorzugt stirnseitig dort anliegt, ist entsprechend ein Anliegebereich gegeben. Dieser Anliegebereich kann auch bevorzugt Teil eines verfahrbaren Kerns in dem zweiten Formteil sein. Nach einem Verfahren des Freihalteteils in die zweite Stellung und darüber hinaus einem Verfahren des beweglichen Anliegebereiches in eine zurückgezogene Stellung, die einen zusätzlichen Formraum freigibt, kann der in dem ersten Spritzvorgang durch das Freihalteteil gebildete Freiraum als Anspritzweg für den dann bevorzugt größeren, insbesondere volumenmäßig größeren zweiten Freiraum dienen, der durch das Zurückfahren auch des beweglichen Anliegebereiches oder des Formteils erreicht ist.

Bevorzugt wird mit einem Bewegen des Freihalteteils bzw. ggf. der Verschlussnadel in die zweite Stellung die zweite Anspritzdüse geöffnet.

Der Anliegebereich, bevorzugt als Teil des verfahrbaren Kerns, kann auch selbst zwischen einer ersten Anlagestellung in dem ersten Spritzvorgang und einer zweiten Öffnungsstellung in dem zweiten Spritzvorgang, in welchem ein zusätzlicher Formraum freigegeben ist, verfahren werden oder verfahrbar vorgesehen sein. Der Anliegebereich kann aber auch, insbesondere als integrierter Teil der zweiten Formhälfte, feststehend und damit im Zuge der Herstellung des jeweiligen Kunststoff-Spritzteils unbeweglich sein. Mit dem Öffnen des Kunststoff-Spritzwerkzeuges und dem Auseinanderfahren der Formhälften wird er natürlich hierdurch im Zuge der Bewegung der zweiten Formhälfte gleichfalls bewegt.

Somit kann ein Kunststoff-Spritzteil im Zweikomponenten-Spritzverfahren hergestellt werden, das auf einer Seite, nämlich der in dem Kunststoff-Spritzwerkzeug durch die zweite Formhälfte gebildeten Seite, ganz, teilweise oder überwiegend durch die zweite Komponente gebildet sein kann, wobei jedoch auf dieser Seite kein Anspritzpunkt für die zweite Komponente gegeben ist. Vielmehr ist die zweite Komponente von der anderen Seite ausgehend durch den ersten Teilbereich hindurch gespritzt, unter Nutzung des von dem Freihalteteil freigegebenen Raumes.

Die beschriebenen Merkmale beziehen sich ersichtlich auch auf eine diesbezügliche weitere Ausbildung des Kunststoff-Spritzwerkzeuges als solchem.

Soweit das Freihalteteil die Verschlussnadel einer Anspritzdüse, insbesondere der zweiten Anspritzdüse ist, ist diese Verschlussnadel darüber hinaus auch in eine Endstellung verfahrbar, die einer üblichen Endstellung einer Verschlussnadel für die zweite Komponente entspricht.

In dieser Endstellung ist die Anspritzdüse für die zweite Komponente ebenfalls geschlossen, so wie sie in der ersten Stellung des Freihalteteils bzw. der Verschlussnadel geschlossen ist. Wenn nur eine Anspritzdüse zur Verspritzung beider Komponenten vorgesehen ist, ist die Verschlussnadel in eine Endstellung verfahrbar, in welcher jedenfalls oder nur ein Spritzweg für die erste Komponente verschlossen ist. Alternativ oder ergänzend kann auch eine Ausbildung vorgesehen sein, bei welcher die Endstellung auch den Verschluss beider Spritzwege der Anspritzdüse, des Spritzweges für die erste Kunststoffkomponente und den Spritzweg für die zweite Kunststoffkomponente, bildet.

In weiterer Einzelheit ist auch von Bedeutung, dass die Verschlussnadel der Anspritzdüse, oder ggf. der zweiten Anspritzdüse, für die zweite Komponente zwei Verschlussstellungen einnehmen kann. In der ersten Verschlussstellung ist die Verschlussnadel so weit vorgefahren, dass sie zwischen einer beispielsweise Stirnfläche der Verschlussnadel und einer zugeordneten Fläche des Formkerns oder des genannten Anlagebereichs ein Eindringen der ersten Komponente beim Verspritzen der ersten Komponente in einen Bereich zwischen den zugeordneten Flächen der Verschlussnadel und des Formkerns hindert und in der zweiten Verschlussstellung ist die Verschlussnadel so weit zurückgefahren, dass die Stirnfläche oder eine sonstige Fläche der Verschlussnadel begrenzend zu einer Außenfläche des so hergestellten Kunststoff-Spritzteils in dem Kunststoff-Spritzwerkzeug angeordnet ist.

Ein mit dem beschriebenen Verfahren oder mittels des beschriebenen Kunststoff-Spritzwerkzeuges hergestelltes Kunststoffteil weist somit einen den durch die erste Komponente gebildeten Teilbereich des Kunststoffteils durchsetzenden stangenartigen Bereich auf, mit einer gerade verlaufenden Bereichsachse, der durch die zweite Komponente gebildet ist und an dem Beginn des zweiten Teilbereiches oder oberflächlich an dem hergestellten Kunststoff-Spritzteil abschließt. Dieser stangenartige Bereich kann auch als Angussweg durch den ersten Teilbereich zur Bildung des zweiten Teilbereichs gesehen werden. Hierbei ist jedoch der Angussweg integraler Bestandteil des zweiten Teilbereichs und somit auch integraler Bestandteil des hergestellten Kunststoffteils, zumindest auf einem wesentlichen Teil seiner in Erstreckungsrichtung des stangenartigen Bereichs gegebenen Länge.

Der genannte stangenartige Bereich entspricht in einer Querschnittsfläche der Querschnittsfläche des Freihalteteils und damit bevorzugt der Querschnittsfläche der Verschlussnadel der Anspritzdüse oder ggf. der zweiten Anspritzdüse hinsichtlich ihres in das spätere Kunststoffteil hineingefahrenen Bereichs. Der stangenartige Bereich geht entsprechend anderseitig des so hergestellten Kunststoffteils materialeinheitlich in den gegenüber dem stangenartigen Bereich bevorzugt größeren und insbesondere sich radial zu der Bereichsachse erstreckenden Bereich über, der - auch - durch die zweite Komponente gebildet ist, wenn das gegenüberliegende Formteil den beschriebenen verfahrbaren Kern aufweist.

Eine Anspritzdüse für die erste und/oder die zweite Komponente kann insbesondere als Heißkanal-Anspritzdüse gebildet sein. Die erste und/oder zweite Komponente kann ein Hartkunststoff sein und die zweite oder die erste Komponente ein Weichkunststoff. Eine erste Komponente kann auch ein üblicher Kunststoff, also ein Hartkunststoff, ggf. aber auch ein Weichkunststoff sein und die zweite Komponente ein Kunststoff auf derselben Kunststoffbasis, aber bspw. mit Verstärkungsmitteln wie Fasern versehen. Hinsichtlich Hartkunststoff ist im Übrigen bspw. Polypropylen (PP) oder Polyethylen (PE) gegeben und hinsichtlich eines Weichkunststoffes bspw. ein thermoplastisches Elastomer (TPE) oder ein Weich-PVC.

### Kurze Beschreibung der Zeichnungen

Nachstehend ist die Erfindung des Weiteren anhand der beigefügten Zeichnung, die jedoch lediglich ein Ausführungsbeispiel wiedergibt, erläutert. Hierbei zeigt:
- Fig. 1: eine schematische Ansicht einer Kunststoff-Spritzmaschine mit einem zwei Formhälften aufweisenden Kunststoff-Spritz-werkzeug;
- Fig. 2: eine schematische Querschnittsansicht des geschlossenen Kunststoff-Spritzwerkzeuges beim Verspritzen der ersten Komponente;
- Fig. 3: eine Ansicht gemäß Figur 2 beim Verspritzen der zweiten Komponente, nach Verfahren des Formteils in die zweite Kern-stellung und beim Verspritzen der zweiten Komponente;
- Fig. 4: eine Ansicht gemäß Figur 2 bzw. Figur 3 bei Beendigung des Spritzvorganges für die zweite Komponente;
- Fig. 5: eine herausvergrößerte Einzeldarstellung der Anspritzdüse für die zweite Komponente beim Verspritzen der ersten Kompo-nente;
- Fig. 5a: eine Darstellung gemäß Figur 5, mit einer lediglich stirnflächi-gen Anlage der Verschlussnadel 8 an dem Formkern 9 bzw. der Formhälfte 4;
- Fig. 6: eine Darstellung gemäß Figur 5 bei der Verspritzung der zwei-ten Komponente;
- Fig. 6a: eine Darstellung gemäß Figur 6, jedoch mit durchgehendem Formkern 9;
- Fig. 7: eine Darstellung gemäß Figur 2 oder Figur 5 oder Figur 5a, je-doch mit einer Anspritzdüse, mit welcher sowohl ein Kunst-stoff erster Komponente wie auch ein Kunststoff zweiter Kom-ponente verspritzt werden kann;
- Fig. 8: eine Darstellung gemäß Figur 7, bei welcher das Freihalteteil in die Anspritzdüse, die zweite Stellung, verfahren ist und der Spritzweg für die zweite Kunststoffkomponente freigegeben ist; und
- Fig. 9: eine Darstellung gemäß Figur 7 bzw. Figur 8, bei welcher das Freihalteteil in einer dritten Stellung ist.

### Beschreibung der Ausführungsformen

Dargestellt und beschrieben ist eine Kunststoff-Spritzmaschine 1, die ein Kunststoff-Spritzwerkzeug 2 aufweist. Das Kunststoff-Spritzwerkzeug 2 besteht im Einzelnen aus zwei Formhälften 3, 4.

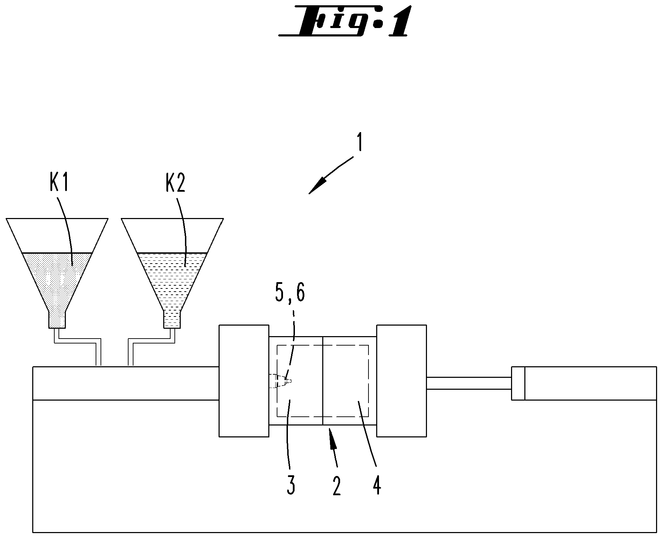

Beim Ausführungsbeispiel sind in einer der Formhälften, der Formhälfte 3, zwei Anspritzdüsen 5, 6 ausgebildet. Die Anspritzdüse 5 dient zur Verspritzung der ersten Komponente und die Anspritzdüse 6 zur Verspritzung der zweiten Komponente. Die Formhälften sind in Figur 1 zur Durchführung der Kunststoff-Spritzvorgänge unmittelbar aneinanderliegend; sie befinden sich in der Form-Verschlussstellung.

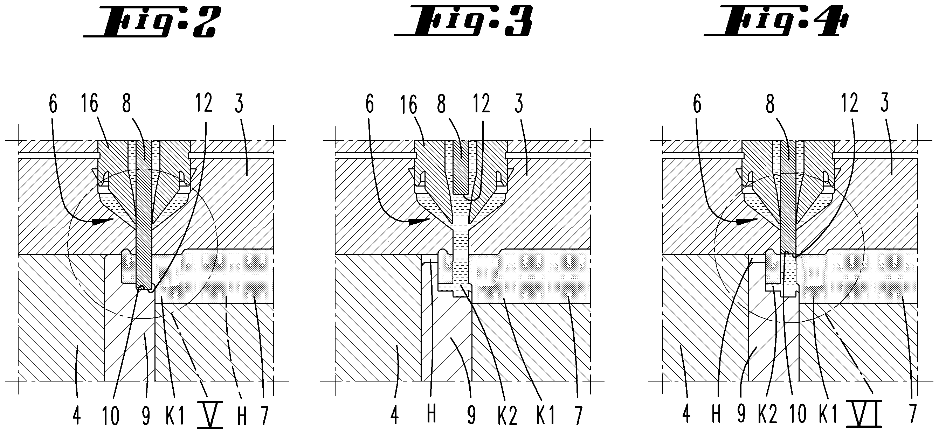

Insgesamt dient die Maschine 1 bzw. das Kunststoff-Spritzwerkzeug 2 zur Herstellung eines Kunststoffteils 7 im Zweikomponenten-Spritzverfahren. Das Kunststoffteil 7 im fertiggestellten Zustand, vergleiche Figur 4, entspricht hierbei zugleich dem Formhohlraum H der mit dem Kunststoff erster Komponente K1 bzw. zweiter Komponente K2 beim Herstellen des Kunststoffteils 7 gefüllt wird.

Das Kunststoff-Spritzwerkzeug 2 weist weiter, hier zugeordnet der Formhälfte 4, einen zwischen einer ersten Kernstellung, siehe etwa Figur 2, und einer zweiten Kernstellung, siehe etwa Figur 3, verfahrbaren Formkern 9 auf. Durch das Verfahren des Formkerns 9 wird in dem Kunststoff-Spritzwerkzeug 2 ein Raum zur Füllung mit der zweiten Komponente freigegeben.

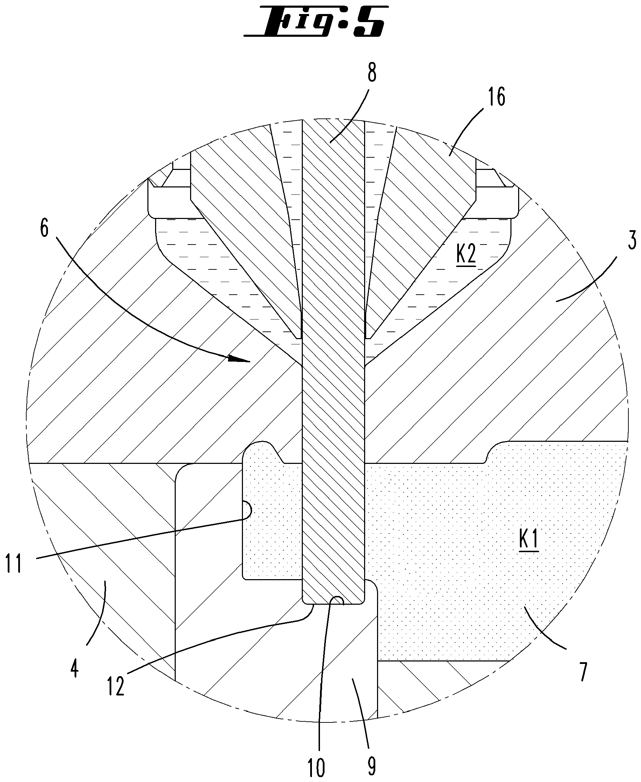

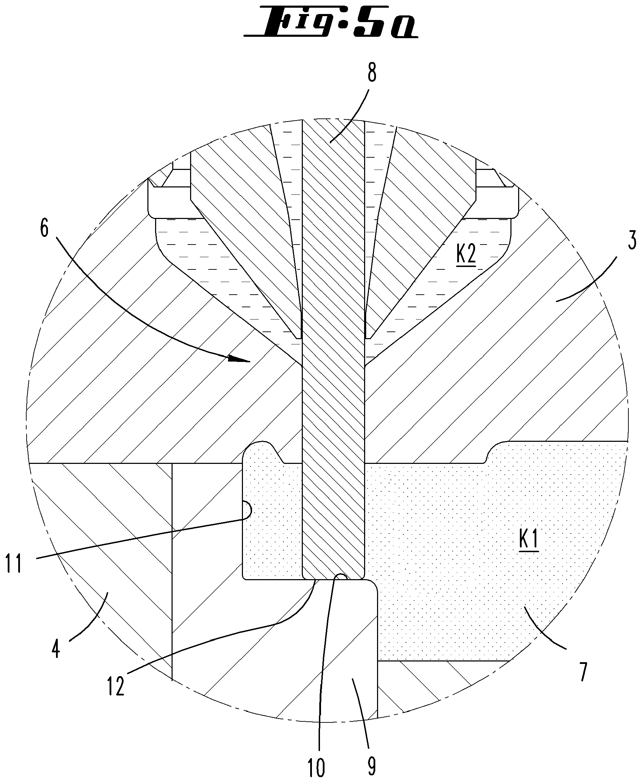

Die Anspritzdüse 6 für die zweite Komponente weist eine Verschlussnadel 8 auf, die allgemeiner auch als Freihalteteil anzusprechen ist, wobei die Verschlussnadel 8 bzw. das Freihalteteil in unterschiedliche Stellungen verfahrbar ist. Beim Ausführungsbeispiel ist die Verschlussnadel 8 in drei unterschiedliche Stellungen verfahrbar. In einer ersten Stellung, siehe etwa Figur 2, ist die Verschlussnadel 8 bis in Anlage bezüglich ihrer Stirnfläche an den Formkern 9 vorgefahren. Entsprechend ist an dem Formkern 9 ein Anliegebereich 12 gegeben. Der Anliegebereich 12 kann auch als Einsenkung oder Öffnung gebildet sein. Hierdurch kann eine Seitenhalterung der Verschlussnadel 8 in der ersten Stellung erreicht werden. Diese Seitenhalterung kann auch dazu genutzt werden, dass ein tatsächliches Anliegen der Stirnfläche an dem Formkern nicht erforderlich ist und im gegebenen Fall dann auch nicht verwirklicht ist. Anstelle des Formkerns könnte hier auch nur die Innenfläche der zweiten Formhälfte 4 als solche gegeben sein. Vorzugsweise, vgl. Figur 5a, ist aber nur eine Stirnflächenanlage der Verschlussnadel 8 an dem Formkern 9 oder der Formhälfte 4 als solcher gegeben. Das Freihalteteil bzw. die Verschlussnadel 8 durchsetzt hierbei einen Bereich, der später bei dem hergestellten Kunststoffteil durch verspritzten Kunststoff gefüllt ist. In dieser Stellung der Verschlussnadel 8 wird entsprechend der von der Verschlussnadel 8 durchsetzte Bereich im Hinblick auf die erste Komponente K1 freigehalten. Die erste Komponente K1 kann beim Verspritzen nicht in diesen Bereich eindringen.

Dasselbe Freihalteteil, bzw. beim Ausführungsbeispiel dieselbe Verschlussnadel 8, das bzw. die für den ersten Spritzvorgang zur Begrenzung des Freiraumes genutzt wurde, ist in demselben Kunststoff-Spritzwerkzeug, siehe Figur 3, in eine zweite Stellung verfahren. In der zweiten Stellung ist das Freihalteteil zu dem Formteil hin verfahren, konkret bei dem Ausführungsbeispiel auch in das Formteil bzw. in die Anspritzdüse des Formteils eingefahren, in welchem die Anspritzdüse zum Verspritzen der zweiten Kunststoffkomponente ausgebildet ist. In dem Formhohlraum H wurde hierdurch der Freiraum freigegeben. Beim Ausführungsbeispiel ist das durch die Verschlussnadel 8 gebildete Freihalteteil vollständig zurückgezogen und das Ausbringen der zweiten Kunststoffkomponente K2 kann dann stattfinden bzw. ist im gegebenen Fall hierdurch zugleich möglich. Figur 3 zeigt den Zustand, in welchem die zweite Komponente K2 bereits verspritzt ist.

Der durch das Verfahren der Verschlussnadel 8 in die zweite Stellung freigegebene Freiraum kann zusätzlich zu einem Raum gegeben sein, der durch ein Verfahren des Formkerns 9 freigegeben wird, wie weiter oben auch schon beschrieben. Bei den Darstellungen der Figur 3 (und 4, siehe nachstehend) ist dies der Fall.

Darüber hinaus ist die Verschlussnadel 8 in eine dritte Stellung, siehe Figur 4, verfahrbar, in welcher sie in gleicher Weise wie in der ersten Stellung die Anspritzdüse 6 verschließt, so dass keine Kunststoffmasse mehr austreten kann. In dieser dritten Stellung ist jedoch ihre Stirnfläche 10 abschließend zu einem Bereich des Kunststoffteils angeordnet, der später ein Teil der Außenfläche des Kunststoffteils ist.

In Figur 5 ist die Anspritzdüse 6 in vergrößerter Darstellung hinsichtlich der ersten Stellung der Verschlussnadel 8 dargestellt. Es ist ersichtlich, dass die Verschlussnadel 8 den Bereich des Formhohlraums, der danach mit der ersten Komponente gefüllt wird, durchsetzt und mit ihrer Stirnfläche 10 in Anlage an dem Formkern 9 ist. In dieser Stellung wird die erste Komponente K1 in den Formhohlraum eingespritzt und das Teil erster Komponente, der Vorspritzling, erzeugt. Der Formkern 9 begrenzt bei diesem Ausführungsbeispiel auch eine Seitenfläche 11 des später hergestellten Kunststoffteils, welche Seitenfläche 11 bei dem dargestellten Ausführungsbeispiel durch die erste Komponente K1 gebildet ist. Die Komponente K1 kann die Verschlussnadel 8 wie in dem Ausführungsbeispiel auf einem Teilbereich ihrer Erstreckung vollständig umgeben. In diesem Teilbereich ist der Freiraum entsprechend eine Durchgangsöffnung in der ersten Komponente K1.

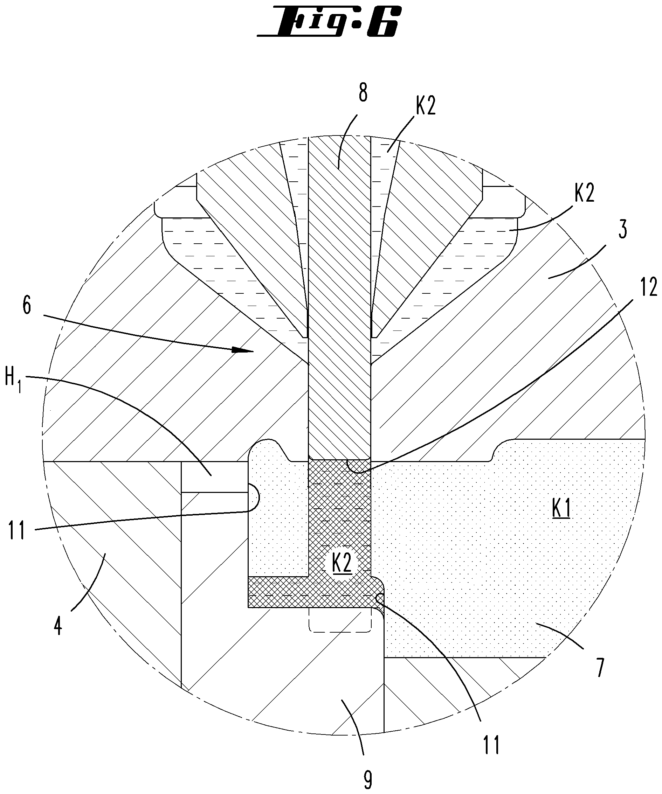

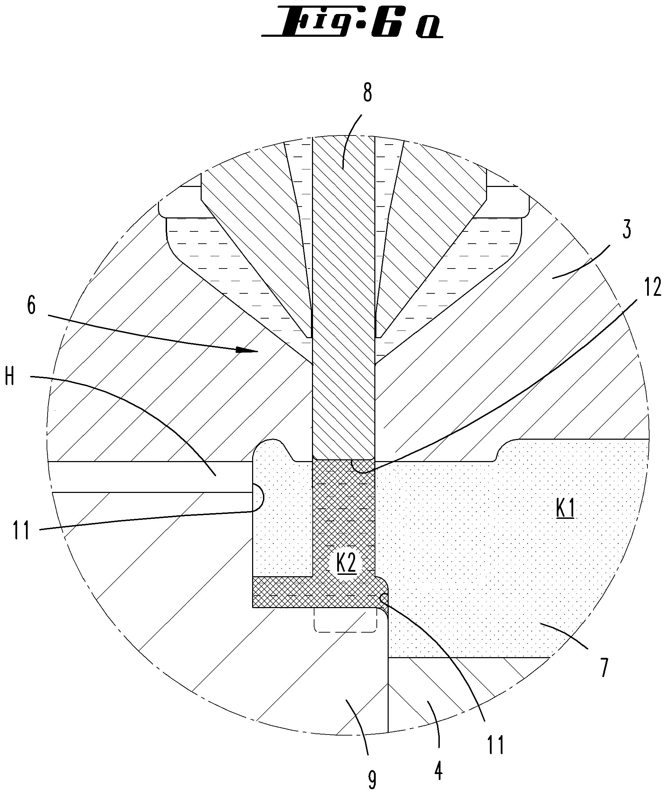

In Figur 6 ist die Anspritzdüse 6 hinsichtlich der Stellung der Verschlussnadel 8 in der zweiten Stellung gezeigt. Der Formkern 9 ist in der zweiten Kernstellung und die Seitenfläche 11 ist teilweise freiliegend im Hinblick auf den von dem Formkern 9 freigegebenen Bereich des Formhohlraums. Durch das Verfahren des Formkerns 9 in die zweite Kernstellung ist der in Figur 6 kreuzschraffierte zusätzliche Formraum freigegeben und nach Verspritzen der zweiten Komponente K2 mit dieser ausgefüllt.

Figur 6 geht hinsichtlich des kreuzschraffierten Bereiches von einem zuvor lediglich stirnseitigen Anliegen des Freihalteteils 8 an dem gegenüberliegenden Formteil, hier konkret dem Formkern 9, aus, vergleiche Figur 5a. Bei einer Ausbildung des Anliegebereiches gemäß der Figur 5 wäre zusätzlich der in dem Formteil 9 in Figur 6 strichliniert umrandete Bereich mit der zweiten Komponente K2 gefüllt.

Der Formkern 9 dichtet zugleich auch an einem weiteren Bereich der zuvor gebildeten Seitenfläche 11 den freigegebenen Hohlraum H1 ab, so dass die in dieser Stellung der Anspritzdüse 6 verspritzte Kunststoffmasse der zweiten Komponente K2 nicht in den freigegebenen Hohlraum H1 eindringen kann.

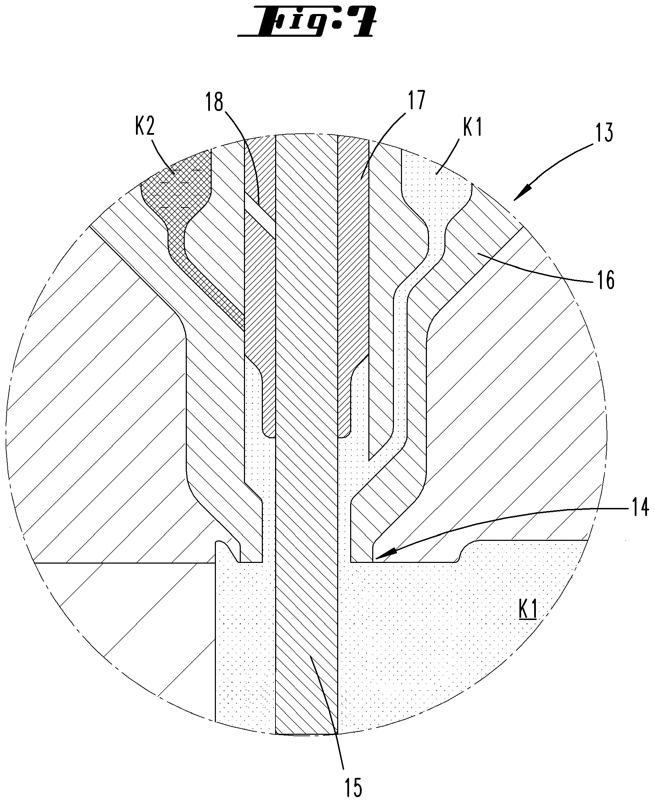

Mit Bezug zu Figur 7 ist eine zweite Anspritzdüse 13 dargestellt, mit welcher sowohl die erste Komponente K1 wie die zweite Komponente K2 zugleich aus derselben Mündung 14 verspritzt werden kann.

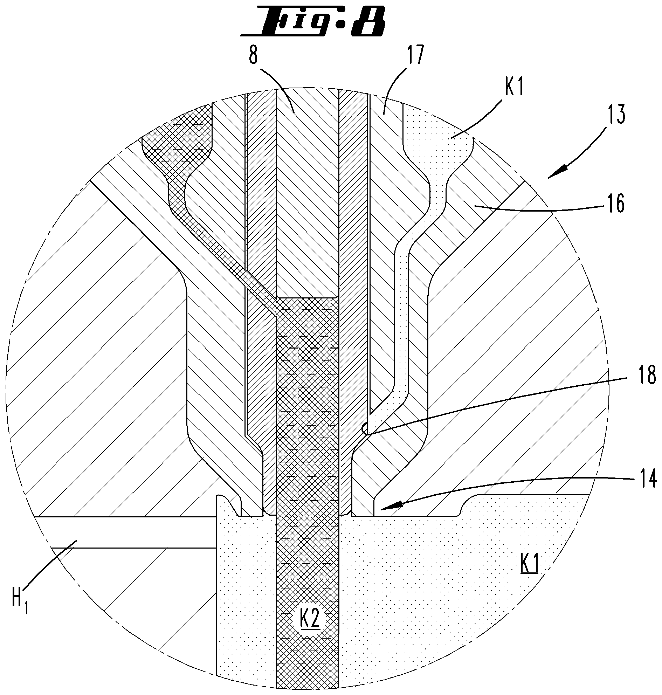

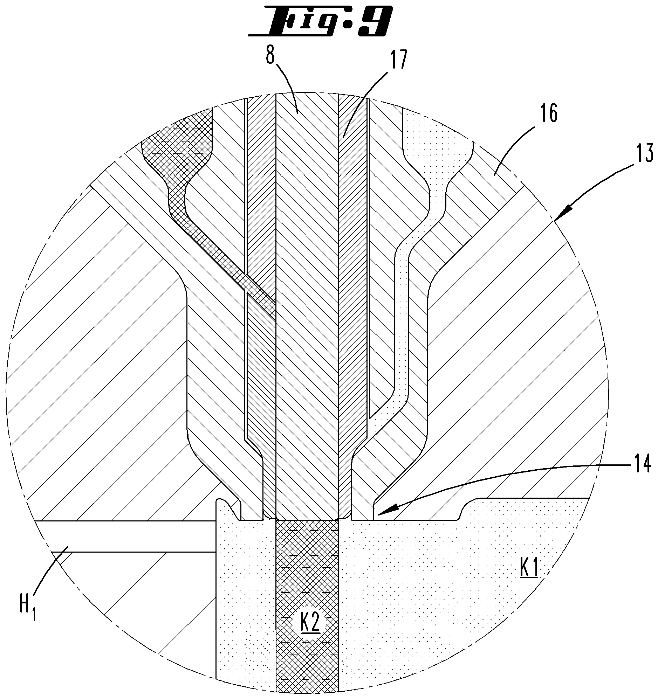

Diese Anspritzdüse 13 besitzt gleichfalls ein Freihalteteil 15, das wie beim Ausführungsbeispiel bevorzugt zentral in der Anspritzdüse 13 angeordnet ist. Das Freihalteteil 15 ist verfahrbar zwischen einer ersten Stellung gemäß Figur 7, bevorzugt einer zweiten Stellung gemäß Figur 8 und weiter bevorzugt einer dritten Stellung gemäß Figur 9.

Hinsichtlich der Bewegung aus der ersten Stellung gemäß Figur 7 in die zweite Stellung gemäß Figur 8 wird das Freihalteteil 15 zu der Anspritzdüse 13 hin bewegt. Die Verfahrbarkeit des Freihalteteils 15 ist bezüglich eines feststehenden Grundkörpers 16 der Anspritzdüse 13 gegeben. In gleicher Weise ist auch bei dem ersten Ausführungsbeispiel das Freihalteteil 8, dort auch als Verschlussnadel 8 bezeichnet, verfahrbar relativ zu dem dort auch gegebenen feststehenden Grundkörper 16.

Die Anspritzdüse gemäß den Figuren 7 bis 9 weist weiter ein gesondertes Verschluss- und Öffnungsteil 17 auf. Dieses ist hier rohrartig gebildet, wobei das Freihalteteil 15 im Inneren dieses rohrartigen Teiles bewegbar sein kann. Das Verschluss- und Öffnungsteil 17 kann einen Öffnungsweg 18 aufweisen zur Freigabe eines Spritzweges für den Kunststoff zweiter Komponente K2 im Fall der zweiten Stellung gemäß Figur 8. Hierbei verschließt das Verschluss- und Öffnungsteil 17 bevorzugt zugleich mit einem Flankenbereich 18 schieberartig den Spritzweg für den Kunststoff erster Komponente K1.

Bei dem dargestellten Ausführungsbeispiel bildet auch das Freihalteteil 15 ein Verschlussteil bzw. wirkt im Sinne einer Verschlussnadel, da es ersichtlich in der dritten Stellung gemäß Figur 9 den beim Ausführungsbeispiel hierbei noch durch das Verschluss- und Öffnungsteil 17 teilweise gegebenen Spritzweg für den Kunststoff zweiter Komponente K2 abschiebert.

### Liste der Bezugszeichen

- 1: Kunststoff-Spritzmaschine
- 2: Kunststoff-Spritzwerkzeug
- 3: Formhälfte
- 4: Formhälfte
- 5: Anspritzdüse
- 6: Anspritzdüse
- 7: Kunststoffteil
- 8: Verschlussnadel, Freihalteteil
- 9: Formkern
- 10: Stirnfläche
- 11: Seitenfläche
- 12: Anliegebereich
- H: Hohlraum
- H1: freigegebener Hohlraum
- K1: erste Komponente
- K2: zweite Komponente

## Patentansprüche

1. Verfahren zur Herstellung eines Kunststoffteils (7) im Zweikomponenten-Spritzverfahren mit einem ein erstes und ein zweites Formteil (3, 4) aufweisenden Kunststoff-Spritzwerkzeug (2), wobei die Formteile (3, 4) relativ zueinander zwischen einer Form-Öffnungsstellung und einer Form-Verschlussstellung bewegbar sind, wobei weiter in einem Formteil (3,4) eine Anspritzdüse (5, 6) ausgebildet ist, eine erste und eine zweite Kunststoffkomponente (K1, K2) verspritzt werden kann und ein Freihalteteil (8) vorgesehen ist, wobei darüber hinaus zur Herstellung des Kunststoff-Spritzteils (7) in einem ersten Spritzvorgang die erste Komponente (K1) zur Bildung eines ersten Teilbereichs des Kunststoff-Spritzteils (7) verspritzt wird und in einem zweiten Spritzvorgang die zweite Komponente (K2) zur Bildung eines zweiten Teilbereichs des Kunsstoff-Spritzteils (7) verspritzt wird, wobei sich weiter das Freihalteteil (8) vor einer Durchführung des ersten Spritzvorganges in der Form-Verschlussstellung in der ersten Stellung befindet, in welcher es einen Freiraum begrenzt, wonach in dem ersten Spritzvorgang der den Freiraum aufweisende erste Teilbereich hergestellt wird, und für den zweiten Spritzvorgang, in welchem der zweite Teilbereich unter Nutzung des Freiraums hergestellt wird, das Freihalteteil (8) in eine zweite Stellung verfahren wird, wobei weiter die zweite Stellung durch ein Verfahren des Freihalteteils (8) zu dem Formteil (3, 4) hin erreicht wird, in welchem die Anspritzdüse (5, 6) zum Verspritzen der zweiten Kunststoffkomponente (K2) ausgebildet ist, und ein zwischen einer ersten und einer zweiten Kernstellung verfahrbarer Formkern (9) vorgesehen ist und das Freihalteteil (8) in der ersten Stellung bis in eine Anlage bzgl. ihrer Stirnfläche an den Formkern (9) vorgefahren ist,
**dadurch gekennzeichnet, dass** das Freihalteteil (8) als ein bevorzugt zentral in der Anspritzdüse (5, 6) angeordnetes Stangenteil oder als Verschlussteil der Anspritzdüse (5, 6) ausgebildet ist, dass der Formkern (9) auch eine Seitenfläche (11) des Kunststoffteils (7) begrenzt, dass die Seitenfläche (11) in der zweiten Kernstellung teilweise freiliegend ist im Hinblick auf einen von dem Formkern (9) freigegebenen Hohlraum (H1) des Formhohlraums und dass der Formkern (9) zugleich auch an einem weiteren Bereich der zuvor gebildeten Seitenfläche (11) den freigegebenen Hohlraum (H1) abdichtet, so dass die in dieser Stellung der Anspritzdüse (5, 6) verspritzte Kunststoffmasse der zweiten Komponente (K2) nicht in den freigegebenen Hohlraum (H1) eindringen kann.

2. Verfahren nach Anspruch 1, **dadurch gekennzeichnet, dass** die Anspritzdüse (5, 6) eine Düsenmündung mit einer Mündungsebene aufweist, dass das Freihalteteil (8)das Verschlussteil der Anspritzdüse (5, 6) ist, mit welcher die zweite Kunststoffkomponente (K2) verspritzt wird und dass das Freihalteteil (8) gesehen von dieser Anspritzdüse (5, 6) aus für die Durchführung des Spritzvorganges zur Ausbringung der ersten Kunststoffkomponente (K1) über die Mündungsebene der Anspritzdüse (5, 6), mit welcher die zweite Kunststoffkomponente (K2) verspritzt wird, vorgefahren wird und/ oder, bevorzugt, dass der durch das Verfahren des Freihalteteils (8) freigegebene Freiraum ohne Öffnung des Kunststoff-Spritzwerkzeuges (2) mit der zweiten Komponente (K2) gefüllt wird.

3. Verfahren nach einem der vorhergehenden Ansprüche, **dadurch gekennzeichnet, dass** mit Bewegen des Freihalteteils (8) in die zweite Stellung die Anspritzdüse (5, 6) zur Ausbringung der zweiten Kunststoffkomponente (K2) geöffnet wird.

4. Verfahren nach einem der vorhergehenden Ansprüche, **dadurch gekennzeichnet, dass** das Freihalteteil (8) und der Formkern, zur Durchführung des zweiten Spritzvorganges, entgegengesetzt zueinander bewegt werden.

5. Verfahren nach einem der vorhergehenden Ansprüche, **dadurch gekennzeichnet, dass** das Freihalteteil (8) bei einer Durchführung des zweiten Spritzvorganges einen Oberflächenanteil der Formhälfte bildet, in welcher sich die Anspritzdüse (5, 6) befindet.

6. Verfahren nach einem der vorhergehenden Ansprüche, **dadurch gekennzeichnet, dass** eine erste Anspritzdüse (5, 6) zum Verspritzen der ersten Kunststoffkomponente (K1) und eine zweite Anspritzdüse (5, 6) zum Verspritzen der zweiten Kunststoffkomponente (K2) vorgesehen ist.

7. Verfahren nach Anspruch 6, **dadurch gekennzeichnet, dass** die erste Anspritzdüse (5, 6) und die zweite Anspritzdüse (5, 6) in demselben Formteil (3, 4) ausgebildet sind.

## Claims

1. Method for producing a plastic part (7) in a two-component injection moulding process using a plastic injection molding tool (2) which comprises a first and a second moulded part (3, 4), wherein the moulded parts (3, 4) are movable relative to one another between a mould-open position and a mould-closed position, wherein, furthermore, an injection nozzle (5, 6) is formed in a moulded part (3, 4), a first and a second plastic component (K1, K2) are able to be injected, and a clearance part (8) is provided,wherein, in addition, in order to produce the plastic injection-moulded part (7), the first component (K1) is injected in a first injection-molding process to form a first partial area of the plastic injection-moulded part (7), and the second component (K2) is injected in a second injection-moulding process to form a second partial area of the plastic injection-moulded part (7),wherein, furthermore, before the first injection process is carried out, the clearance part (8) is situated in the mould-closed position in the first position, in which it delimits a free space and, thereafter,, in the injection-moulding process, the first partial area having the free space is produced and, with respect to the second injection-moulding process, in which the second partial area is produced using the free space, the clearance part (8) is moved into a second position, wherein, furthermore, the second position is achieved by moving the clearance part (8) towards the moulded part (3, 4), in which position the injection nozzle (5, 6) is designed for injecting the second plastic component (K2) and a mould core (9), which can be moved between a first and a second core position, is provided, and the clearance part (8) is advanced in the first position into an abutment with respect to its end face to the mould core (9), **characterised in that** the clearance part (8) is designed as a rod part, preferably arranged centrally in the injection nozzle (5, 6), or as a closure part of the injection nozzle (5, 6), that the mould core (9) also delimits a side surface (11) of the plastic part (7), that the side surface (11) is partially exposed in the second core position with regard to a cavity (H1) of the mould cavity released by the mould core (9), and that the mould core (9) also seals the released cavity (H1) on a further area of the previously formed side surface (11), so that the plastic compound of the second component (K2) injected in this position of the injection nozzle (5, 6) cannot penetrate into the released cavity (H1).

2. Method according to claim 1, **characterised in that** the injection nozzle (5, 6) comprises a nozzle mouth with a mouth plane, that the clearance part (8) is the closure part of the injection nozzle (5, 6),using which the second plastic component (K2) is injected, and that the closure part (8), as seen from said injection nozzle (5, 6), for carrying out the spraying process for dispensing the first plastic component (K1) over the mouth plane of the injection nozzle (5, 6), using which the second plastic component (K2) is injected, is advanced and/or, preferably, that the free space released by the movement of the clearance part (8) is filled with the second component (K2) without opening the plastic injection moulding tool (2).

3. Method according to one of the preceding claims, **characterised in that**, when the clearance part (8) is moved into the second position, the injection nozzle (5, 6) is opened in order to dispense the second plastic component (K2).

4. Method according to one of the preceding claims, **characterised in that** the clearance part (8) and the mould core are moved in opposite directions with respect to each other in order to carry out the second injection moulding process.

5. Method according to one of the preceding claims, **characterised in that** the clearance part (8) forms a surface portion of the mould half in which the injection nozzle (5, 6) is situated when the second injection moulding process is carried out.

6. Method according to one of the preceding claims, **characterised in that** a first injection nozzle (5, 6) for injecting the first plastic component (K1) and a second injection nozzle (5, 6) for injecting the second plastic component (K2) are provided.

7. Method according to claim 6, **characterised in that** the first injection nozzle (5, 6) and the second injection nozzle (5, 6) are formed in the same moulded part (3, 4).

## Revendications

1. Procédé de fabrication d'une pièce en matière plastique (7) selon le procédé de moulage par injection à deux composants avec un outil d'injection de matière plastique (2) présentant une première et une deuxième partie de moule (3, 4), dans lequel les parties de moule (3, 4) sont mobiles l'une par rapport à l'autre entre une position d'ouverture de moule et une position de fermeture de moule, dans lequel en outre une buse d'injection (5, 6) est formée dans une partie de moule (3, 4), un premier et un deuxième composant de matière plastique (K1, K2) peuvent être injectés et une pièce de dégagement (8) est prévue, dans lequel, en outre, pour la fabrication de la pièce moulée par injection de matière plastique (7), le premier composant (K1) est injecté dans une première opération d'injection pour former une première zone partielle de la pièce moulée par injection de matière plastique (7) et le deuxième composant (K2) est injecté dans une deuxième opération d'injection pour former une deuxième zone partielle de la pièce moulée par injection de matière plastique (7), dans lequel en outre, avant l'exécution de la première opération d'injection, la pièce de dégagement (8) se trouve, en position de fermeture du moule, dans la première position dans laquelle elle délimite un espace libre, à la suite de quoi la première zone partielle présentant l'espace libre est produite lors de la première opération d'injection, et pour la deuxième opération d'injection dans laquelle la deuxième zone partielle est produite en utilisant l'espace libre, la pièce de dégagement (8) est déplacée dans une deuxième position, dans lequel en outre la deuxième position est atteinte par un déplacement de la pièce de dégagement (8) vers la partie de moule (3, 4) dans laquelle est formée la buse d'injection (5, 6) pour l'injection du deuxième composant de matière plastique (K2), et un noyau de moule (9) déplaçable entre une première et une deuxième position de noyau est prévu, et la pièce de dégagement (8) est, dans la première position, déplacée en avant jusqu'à être en contact en ce qui concerne sa surface frontale contre le noyau de moule (9), **caractérisé en ce que** la pièce de dégagement (8) est conçue comme une tige agencée de préférence centralement dans la buse d'injection (5, 6) ou en tant que pièce de fermeture de la buse d'injection (5, 6), **en ce que** le noyau de moule (9) délimite également une surface latérale (11) de la pièce en matière plastique (7), **en ce que** la surface latérale (11) dans la deuxième position du noyau est partiellement dégagée par rapport à une cavité (H1) de la cavité de moule qui est libérée par le noyau de moule (9), et **en ce que** le noyau de moule (9) ferme en même temps la cavité dégagée (H1) dans une autre zone de la surface latérale (11) formée précédemment de manière que la masse de matière plastique du deuxième composant (K2) injecté dans cette position de la buse d'injection (5, 6) ne peut pas pénétrer dans la cavité libérée (H1).

2. Procédé selon la revendication 1, **caractérisé en ce que** la buse d'injection (5, 6) présente une ouverture de buse avec un plan d'ouverture, **en ce que** la pièce de dégagement (8) est la pièce de fermeture de la buse d'injection (5, 6) avec laquelle le deuxième composant de matière plastique (K2) est injecté, et **en ce que** la pièce de dégagement (8), vue depuis cette buse d'injection (5, 6), est déplacée vers l'avant au-dessus du plan d'ouverture de la buse d'injection (5, 6) avec laquelle le deuxième composant de matière plastique (K2) est injecté et/ou **en ce que**, de préférence, l'espace libre libéré par le déplacement de la pièce de dégagement (8) est rempli avec le deuxième composant (K2) sans ouvrir l'outil d'injection de matière plastique (2).

3. Procédé selon l'une des revendications précédentes, **caractérisé en ce que** la buse d'injection (5, 6) pour décharger le deuxième composant de matière plastique (K2) est ouverte par le déplacement de la pièce de dégagement (8) dans la deuxième position.

4. Procédé selon l'une des revendications précédentes, **caractérisé en ce que** la pièce de dégagement (8) et le noyau de moule sont déplacés dans des directions opposées l'un par rapport à l'autre pour effectuer la deuxième opération d'injection.

5. Procédé selon l'une des revendications précédentes, **caractérisé en ce que** lors de l'exécution de la deuxième opération d'injection, la pièce de dégagement (8) forme une partie de la surface de la moitié de moule dans laquelle se trouve la buse d'injection (5, 6).

6. Procédé selon l'une des revendications précédentes, **caractérisé en ce qu'**il est prévu une première buse d'injection (5, 6) pour l'injection du premier composant de matière plastique (Kl) et une deuxième buse d'injection (5, 6) pour l'injection du deuxième composant de matière plastique (K2).

7. Procédé selon la revendication 6, **caractérisé en ce que** la première buse d'injection (5, 6) et la deuxième buse d'injection (5, 6) sont formées dans la même partie de moule (3, 4).
